# FASCICULE DE BREVET EUROPEEN

(11) **EP 0 543 714 B1**
(45) Date de publication et mention de la délivrance du brevet: **28.01.1998**
(21) Numéro de dépôt: 92403074.5
(22) Date de dépôt: 16.11.1992
(51) Int. Cl.: H04Q 11/00, H04J 14/02

(54) **Repartiteur optique**
Verteilereinrichtung für Lichtwellenleiter
Optical fibre distribution apparatus

(30) Priorité: 19.11.1991 FR 9114227
(43) Date de publication de la demande: 26.05.1993
(73) Titulaire: FRANCE TELECOM, 75015 Paris (FR)
(72) Inventeur: Le Coquil, Emile, F-22300 Lannion (FR); Hamel, André, F-22300 Lannion (FR)
(74) Mandataire: Dubois-Chabert, Guy

(56) Documents cités:
- EP-A- 0 310 058
- EP-A- 0 454 344
- IEEE PROCEEDINGS GLOBAL TELECOMMUNICATIONS CONFERENCE vol. 2, 28 Novembre 1988, HOLLYWOOD (US) pages 933 - 937 SYUJI SUZUKI ET AL. 'Photonic wavelength- division and time-division hybrid switching networks for large line-capacity
- broadband switching systems.'
- ELECTRONIC LETTERS vol. 23, no. 18, 27 Août 1987, STEVENAGE (GB) pages 974 - 976 H. KOBRINSKI 'Crossconnection of wavelength-division-multiplexed high-speed channels'

## Description

La présente invention concerne un répartiteur optique.

Elle s'applique notamment au domaine des télécommunications optiques.

On connaît déjà des répartiteurs mettant en oeuvre une commutation électronique temporelle.

Ces répartiteurs connus présentent des inconvénients :
- ils sont inadaptés au traitement d'informations à grand débit,
- ils sont difficilement compatibles avec des réseaux optiques de transmission d'informations, et
- avec de tels répartiteurs, il est très difficile, voire impossible, d'envoyer une information présente à une entrée à tout ou partie des sorties.

La présente invention a pour but de remédier à ces inconvénients en proposant un répartiteur optique qui met en oeuvre les techniques multicolores et qui est réalisable de manière à avoir une grande capacité.

Le répartiteur optique objet de la présente invention utilise une commutation optique et il est mieux adapté au traitement d'informations à grand débit que les répartiteurs connus, mentionnés plus haut et présente une meilleur compatibilité que ces derniers avec les réseaux optiques de transmission d'informations.

De plus, avec un répartiteur conforme à l'invention, il est possible d'envoyer une information présente à une entrée de ce répartiteur à tout ou partie des sorties du répartiteur.

On connaît par le document EP-A-0 310 058 un répartiteur correspondant au préambule de la revendication 1.

De façon précise, la présente invention a pour objet un répartiteur optique conformément à la revendication 1.

Le nombre N peut être égal au nombre M.

Le répartiteur objet de l'invention est susceptible d'avoir une grande capacité à partir d'arrangements de modules de traitement utilisant un nombre limité de longueurs d'ondes optiques.

Selon un premier mode de réalisation particulier du répartiteur optique objet de la présente invention, chaque module de traitement comprend :
- des moyens de démultiplexage électronique à 1 entrée reliée à l'entrée du répartiteur qui correspond à ce module de traitement, et N sorties, ces moyens de démultiplexage étant prévus pour fournir respectivement en leurs N sorties les N signaux démultiplexés,
- des moyens de réorganisation à N entrées respectivement reliées aux N sorties des moyens de démultiplexage, et à N sorties, ces moyens de réorganisation étant commandés par les moyens de gestion et prévus pour réorganiser temporellement les N signaux démultiplexés,
- N convertisseurs électro-optiques dont les entrées reçoivent respectivement les N signaux réorganisés temporellement et qui sont prévus pour fournir respectivement N signaux optiques dont les longueurs d'ondes respectives sont différentes les unes des autres, et
- des moyens d'aiguillage qui sont commandés par les moyens de gestion et prévus pour aiguiller chaque signal optique vers la sortie voulue du répartiteur.

Dans le cas de ce premier mode de réalisation particulier, les moyens d'aiguillage peuvent comprendre :
- un coupleur optique intermédiaire à N entrées qui reçoivent respectivement les N signaux optiques, et N sorties, et
- N filtres optiques accordables qui sont commandés par les moyens de gestion, dont les entrées sont respectivement reliées aux sorties du coupleur optique intermédiaire et dont les N sorties sont respectivement reliées à N entrées appartenant respectivement aux N coupleurs optiques de sortie, chaque signal élémentaire traité étant ainsi aiguillé vers l'une des sorties du répartiteur.

Dans un autre mode de réalisation correspondant encore à ce premier mode de réalisation particulier, les moyens d'aiguillage comprennent :
- un ensemble de NxN interrupteurs optiques qui sont commandés par les moyens de gestion et qui forment N lignes et N colonnes, chaque ligne comprenant N de ces interrupteurs optiques montés en série et formant une ligne optique reliée à la sortie de l'un des convertisseurs électro-optiques, et
- N coupleurs optiques auxiliaires à N entrées et 1 sortie, les N entrées de chaque coupleur optique auxiliaire étant respectivement reliées aux N interrupteurs optiques de l'une des N colonnes et la sortie de ce coupleur optique auxiliaire étant reliée à l'une des entrées de l'un des coupleurs optiques de sortie du répartiteur.

Dans ce dernier cas, il est préférable que les moyens d'aiguillage comprennent en outre :
- un coupleur optique intermédiaire à N entrées qui reçoivent respectivement les N signaux optiques des convertisseurs électro-optiques, et 1 sortie, et
- un démultiplexeur en longueur d'onde à 1 entrée reliée à la sortie de ce coupleur optique intermédiaire, et N sorties respectivement reliées aux N lignes optiques de l'ensemble des interrupteurs optiques.

Ceci est préférable pour des questions d'ingénierie car on simplifie ainsi la réalisation des liaisons optiques entre les différents sous-ensembles du répartiteur.

Dans le cas du premier mode de réalisation particulier, les signaux optiques issus des coupleurs optiques de sortie du répartiteur peuvent être transmis directement par des guides d'ondes optiques (des fibres optiques par exemple) si l'influence de la dispersion chromatique ne perturbe pas la transmission des informations.

Dans le cas contraire, pour remédier à la perturbation dûe à la dispersion chromatique, il est préférable que le répartiteur comprenne en outre :
- N photodétecteurs dont les entrées sont respectivement reliées aux sorties des coupleurs optiques de sortie du répartiteur, et
- N convertisseurs électro-optiques auxiliaires dont les entrées sont respectivement reliées aux sorties des N photodétecteurs, les N sorties du répartiteur étant respectivement reliées aux sorties de ces N convertisseurs électro-optiques auxiliaires, de sorte que chaque sortie du répartiteur fournit des signaux élémentaires qui sont sous forme optique et sont à la même longueur d'onde.

Selon un deuxième mode de réalisation particulier du répartiteur objet de la présente invention, chaque module de traitement comprend :
- des moyens de démultiplexage électronique à 1 entrée reliée à l'entrée du répartiteur qui correspond à ce module de traitement, et N sorties, ces moyens de démultiplexage étant prévus pour fournir respectivement en leurs N sorties les N signaux démultiplexés,
- des moyens de réorganisation à N entrées respectivement reliées aux N sorties des moyens de démultiplexage, et à N sorties, ces moyens de réorganisation étant commandés par les moyens de gestion et prévus pour réorganiser temporellement les N signaux démultiplexés,
- N convertisseurs électro-optiques accordables dont les entrées reçoivent respectivement les N signaux réorganisés temporellement, qui sont prévus pour fournir respectivement N signaux optiques, et qui sont commandés par les moyens de gestion,
- un coupleur optique intermédiaire à N entrées qui reçoivent respectivement les N signaux optiques, et N sorties, et
- N filtres optiques dont les entrées sont respectivement reliées aux sorties du coupleur optique intermédiaire, dont les N sorties sont respectivement reliées à N entrées appartenant respectivement aux N coupleurs optiques de sortie, et qui ne laissent passer chacun qu'une seule longueur d'onde, les N longueurs d'onde que laissent respectivement passer ces filtres étant différentes les unes des autres, chaque signal élémentaire traité étant ainsi aiguillé vers l'une des sorties du répartiteur.

Dans un mode de réalisation particulier du répartiteur objet de l'invention, chaque entrée de ce répartiteur reçoit des signaux élémentaires sous forme optique et est reliée à l'entrée d'un photodétecteur dont la sortie est reliée à l'entrée du module de traitement correspondant pour fournir à ce dernier des signaux élémentaires sous forme électrique.

Enfin, le répartiteur optique objet de la présente invention est susceptible de travailler
- en mode de transport synchrone STM ("Synchronous Transfer Mode" dans les articles en langue anglaise) ou
- en mode de transfert asynchrone ATM ("Asynchronous Transfer Mode" dans les articles en langue anglaise).

Ainsi, dans un mode de réalisation particulier, chaque entrée du répartiteur reçoit des signaux qui sont des modules de transport synchrone d'ordre N (Synchronous Transport Module -N dans les articles en langue anglaise), et qui sont notés STM-N, chaque module de traitement étant prévu pour traiter simultanément les N modules de transport synchrone d'ordre 1 (notés STM-1) de chacun de ces modules de transport synchrone d'ordre N.

Dans un autre mode de réalisation particulier, chaque entrée du répartiteur reçoit des signaux élémentaires organisés sous forme de paquets et transmis en mode de transfert asynchrone ATM, chaque module de traitement étant prévu pour traiter simultanément N paquets consécutifs.

La présente invention sera mieux comprise à la lecture de la description d'exemples de réalisation donnés ci-après à titre purement indicatif et nullement limitatif, en faisant référence aux dessins annexés sur lesquels :
- la figure 1 est une vue schématique d'un répartiteur optique conforme à l'invention, comportant des filtres optiques accordables, une entrée qui reçoit des signaux, ou faisceaux, de type STM-N, et une sortie, N étant égal à 4 dans l'exemple représenté,
- les figures 2A, 2B et 2C montrent la répartition temporelle des signaux, ou trames, de type STM-1, faisant partie des signaux STM-N, à différents niveaux du répartiteur représenté sur la figure 1,
- la figure 3 est une vue schématique d'un mode de réalisation particulier du répartiteur optique objet de l'invention, comportant des filtres optiques accordables, M entrées qui reçoivent des signaux de type STM-N et N sorties, M et N étant égaux à quatre dans l'exemple représenté,
- les figures 4A, 4B et 4C montrent la répartition temporelle des signaux de type STM-1, faisant partie des signaux STM-N, à différents niveaux du répartiteur représenté sur la figure 3,
- la figure 5 est une vue schématique d'un autre répartiteur conforme à l'invention, utilisant des interrupteurs optiques,
- la figure 6 est une vue schématique et partielle d'un répartiteur optique conforme à l'invention dans lequel chaque sortie fournit des signaux de type STM-1 sous forme optique et ayant tous la même longueur d'onde, et
- la figure 7 est une vue schématique d'un autre répartiteur optique conforme à l'invention, comportant des convertisseurs électro-optiques accordables.

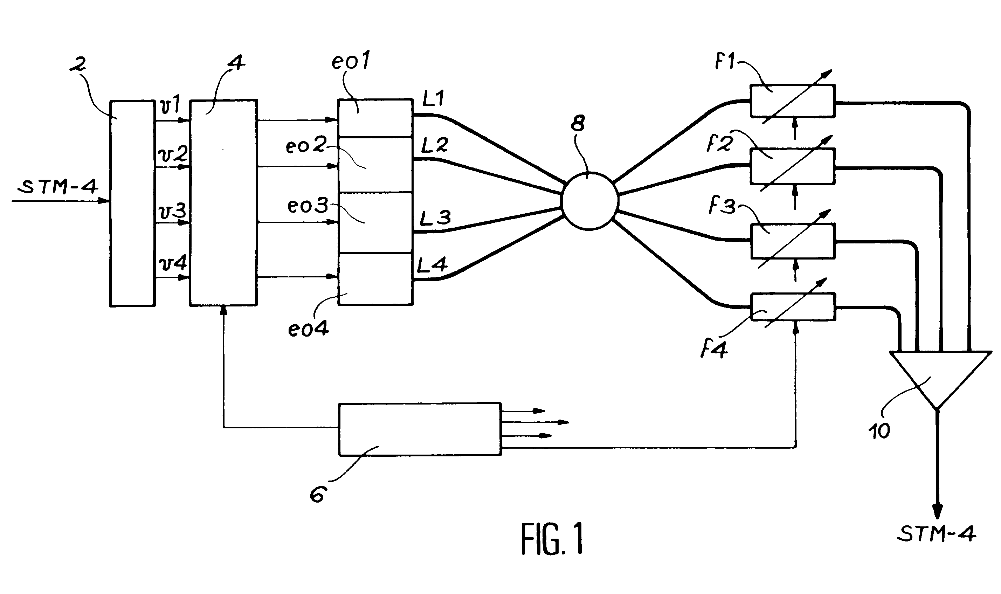

Sur la figure 1, on a représenté schématiquement un répartiteur optique conforme à l'invention, comportant un seul module de traitement.

Le répartiteur représenté sur la figure 1 a ainsi une entrée en laquelle se présentent des signaux électriques de type STM-N, N étant égal à 4 dans l'exemple représenté sur la figure 1.

Etant donné un signal STM-4 incident, le répartiteur de la figure 1 fournit en sortie un signal STM-4 à l'intérieur duquel la répartition des signaux STM-1 du signal STM-4 incident a été modifiée.

Le répartiteur représenté sur la figure 1 comprend des moyens de démultiplexage électronique 2 dont l'entrée reçoit les signaux STM-4 incidents et qui fournit respectivement sur ses quatre voies de sorties v1, v2, v3 et v4 les quatre signaux STM-1 du signal STM-4 incident.

Le répartiteur de la figure 1 comprend aussi des moyens de réorganisation temporelle 4 dont les quatre entrées reçoivent respectivement ces quatre signaux STM-1 démultiplexés.

En outre, le répartiteur de la figure 1 comprend des moyens de gestion 6 qui sont prévus pour commander les moyens de réorganisation temporelle 4 de manière à modifier la répartition temporelle des signaux STM-1 démultiplexés.

Le répartiteur de la figure 1 comprend aussi quatre convertisseurs électro-optiques eo1, eo2, eo3 et eo4 dont les longueurs d'onde d'émission respectives L1, L2, L3 et L4 sont différentes les unes des autres et qui sont respectivement commandés par les signaux électriques réorganisés temporellement, issus des moyens de réorganisation 4.

Le répartiteur représenté sur la figure 1 comprend enfin :
- un coupleur optique 8 à quatre entrées et quatre sorties,
- quatre filtres optiques électriquement accordables f1, f2, f3 et f4 qui sont commandés par les moyens de gestion 6 et
- un coupleur optique 10 à quatre entrées et une sortie formant d'ailleurs la sortie du répartiteur de la figure 1.

Les quatre entrées du coupleur 8 reçoivent respectivement les signaux optiques fournis par les convertisseurs eo1 à eo4 et ces quatre signaux optiques sont présents sur chacune des quatre sorties du coupleur optique 8.

Ces quatre sorties du coupleur 8 sont respectivement reliées aux entrées des filtres accordables f1 à f4.

Les sorties de ces filtres sont respectivement reliées aux quatre entrées du coupleur optique de sortie 10.

La modification de la répartition des signaux STM-1 à l'intérieur du signal STM-4 incident est effectuée dans le domaine spectral par étalement sur les quatre longueurs d'onde L1 à L4 et dans le domaine temporel à l'aide des moyens de gestion 6.

On précise que ces moyens de gestion 6 prennent en compte les aspects mémorisation, décodage de l'en-tête de chaque signal STM-1, mise à jour de la nouvelle en-tête, et gèrent les risque de collision dans le domaine temporel.

Ainsi, les moyens de gestion 6 analysent l'en-tête de chaque signal STM-1 et en modifient le contenu pour tenir compte de la nouvelle destination.

Les signaux STM-1 sont, après démultiplexage électronique et réarrangement temporel, transposés sous forme optique.

Dans l'exemple représenté, les longueurs d'onde L1, L2, L3 et L4 sont respectivement associées aux rangs des signaux STM-1 dans le signal STM-4 incident.

Par conséquent, la longueur d'onde L1 est affectée au premier signal STM-1 qui est présent sur la première sortie v1 du démultiplexeur 2, la longueur d'onde L2 est affectée au deuxième signal STM-1 qui est présent sur la sortie v2 de ce démultiplexeur et ainsi de suite.

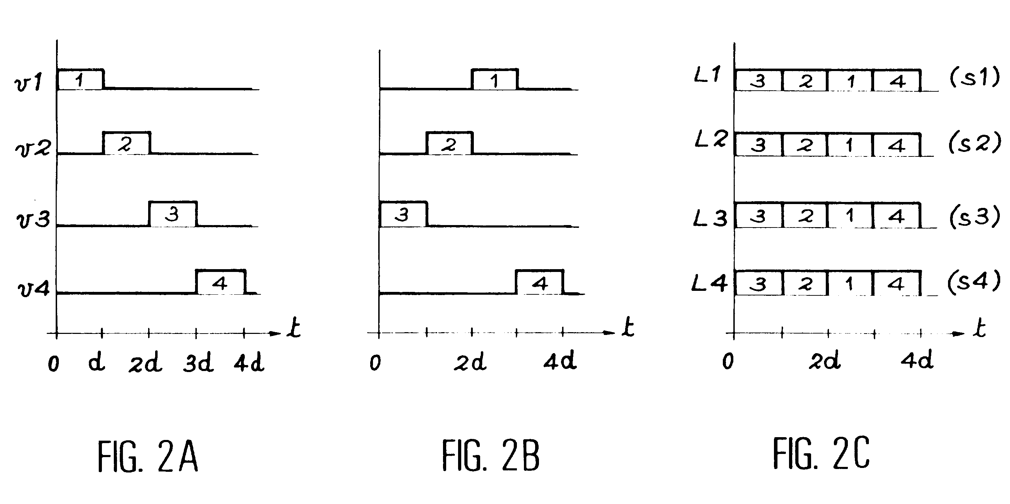

On voit sur la figure 2A la répartition temporelle des signaux STM-1 (respectivement numérotés de 1 à 4), à la sortie du démultiplexeur 2.

Sur la figure 2A, le temps t est compté sur un axe dont l'origine O coïncide avec le début du premier signal STM-1, chacun des signaux STM-1 ayant la même durée d.

La figure 2B montre un exemple de réarrangement obtenu à la sortie des moyens de réorganisation 4 : le STM-1 de rang 1 du STM-4 incident passe à l'emplacement temporel de rang 3 du nouveau STM-4 tandis que le STM-1 de rang 3 du STM-4 incident occupe l'emplacement temporel de rang 1 du nouveau STM-4.

Les signaux STM-1 réarrangés modulent directement les convertisseurs eo1 à eo4 de longueurs d'onde respectives L1 à L4.

Les signaux optique résultant sont mélangés par le coupleur optique 8 et les quatre sorties s1, s2, s3 et s4 de celui-ci reçoivent toutes le nouveau signal STM-4 comme l'indique la figure 2C.

Dans l'exemple simple représenté sur la figure 1, il suffit que les moyens de gestion 6 commandent les filtres optiques accordables électriquement de façon que le filtre f1 laisse passer successivement les longueurs d'onde L3, L2, L1 et L4 et que les autres filtres f2, f3 et f4 restent au repos, pour obtenir, à la sortie du coupleur optique 10, le nouveau STM-4.

Bien entendu, d'autres valeurs de N sont possibles, la valeur 16 par exemple, le signal incident étant alors un STM-16, mais dans ce cas il faut utiliser 16 longueurs d'onde distinctes.

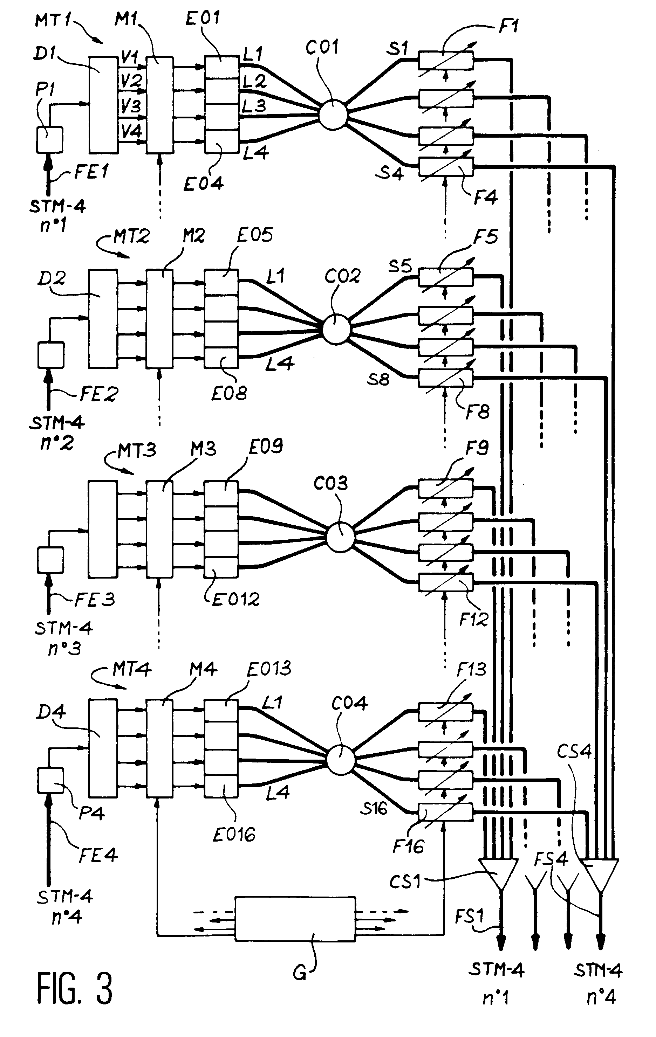

Sur la figure 3, on a représenté schématiquement un autre répartiteur conforme à l'invention qui comprend non pas 1 mais M modules de traitement qui sont identiques, M étant un nombre entier supérieur à 1.

Dans l'exemple représenté sur la figure 3, le nombre M est égal à 4 et les modules de traitement portent respectivement les références MT1, MT2, MT3, et MT4.

Ces modules de traitement MT1 à MT4 reçoivent respectivement quatre signaux STM-N qui sont numérotés de 1 à 4, le nombre N étant égal à 4 dans l'exemple représenté.

Ainsi, chaque STM-4 est une suite de quatre signaux STM-1 et le répartiteur représenté sur la figure 3 est prévu pour brasser ces STM-1.

Ce répartiteur comporte N sorties (quatre dans l'exemple représenté) sur lesquelles les nouveaux STM-4, numérotés de 1 à 4 et résultant de ce brassage, sont disponibles.

Dans l'exemple représenté, les STM-4 d'entrée et les STM-4 de sortie sont sous forme optique.

Les STM-4 d'entrée arrivent aux modules MT1 à MT4 par l'intermédiaire de fibres optiques d'entrée FE1, FE2, FE3 et FE4 et sont convertis sous forme électrique par des photodiodes P1 à P4 avant d'être traités dans les modules MT1 à MT4.

Chaque module de traitement (MT1 à MT4) comporte successivement :
- un démultiplexeur électronique (D1 à D4) à quatre voies de sortie V1, V2, V3, V4 sur lesquelles on trouve respectivement les quatre STM-1 du STM-4 incident correspondant, le premier STM-1 qui se présente à l'entrée du démultiplexeur sortant sur la voie numéro 1, le deuxième sur la voie numéro 2, le troisième sur la voie numéro 3, le quatrième sur la voie numéro 4,
- des moyens de réorganisation (M1 à M4) qui reçoivent en entrée les signaux STM-1 présents sur les voies de sortie du démultiplexeur et qui sont commandés par des moyens de gestion G pour réorganiser temporellement ces STM-1 en réalisant des décalages temporels de ces derniers conformément à la commande des moyens de gestion G,
- quatre convertisseurs électro-optiques (référencés EO1 à EO4 pour le module MT1 ... EO13 à EO16 pour le module MT4) qui sont commandés par les quatre signaux des moyens de réorganisation (M1 à M4) et qui transposent ces signaux sous forme optique et fournissent sur leurs sorties repectives quatre signaux dont les longueurs d'onde respectives L1 à L4 sont différentes les unes des autres,
- un coupleur optique (CO1 à CO4) à quatre entrées, qui reçoivent respectivement les signaux des quatre convertisseurs électro-optiques associés, et à quatre sorties (référencées S1 à S4 pour le module MT1 ... S13 à S16 pour le module MT4),
- quatre filtres optiques accordables électriquement (référencés F1 à F4 pour le module MT1 ... F13 à F16 pour le module MT4) qui sont commandés par les moyens de gestion G, l'entrée de chaque filtre étant reliée à l'une des sorties du coupleur correspondant comme on le voit sur la figure 3.

Le répartiteur représenté sur cette figure 3 comprend également N coupleurs optiques de sortie CS1 à CS4 (N étant égal à 4 dans l'exemple représenté).

Ces coupleurs sont des coupleurs à quatre entrées et une sortie.

Les sorties respectives de ces coupleurs CS1 à CS4 sont reliées à des fibres optiques FS1 à FS4 qui constituent les sorties du répartiteur de la figure 3 et sur lesquelles sont respectivement disponibles les STM-4 de sortie numérotés de 1 à 4.

Comme on le voit sur la figure 3, il existe une correspondance biunivoque entre les sorties des filtres F1 à F16 et les entrées des coupleurs CS1 à CS4.

Plus précisément, les sorties des filtres F1, F5, F9 et F13 sont respectivement reliées aux quatre entrées du coupleur CS1 et ainsi de suite jusqu'aux filtres F4, F8, F12 et F16 dont les sorties sont respectivement reliées aux quatre entrées du coupleur CS4.

Les moyens de gestion G commandent les opérations de réarrangement temporel et commandent aussi les filtres accordables.

Ainsi, les signaux STM-1 sont répartis temporellement et spectralement.

On notera que la même information est transmise sur les quatre sorties de chaque coupleur CO1 à CO4, à différentes longueurs d'onde L1 à L4.

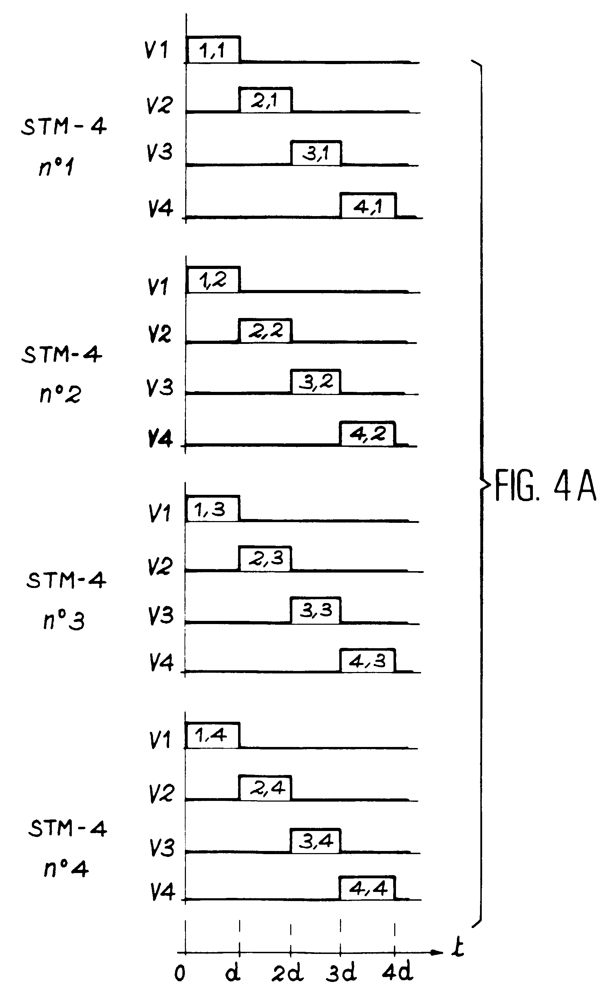

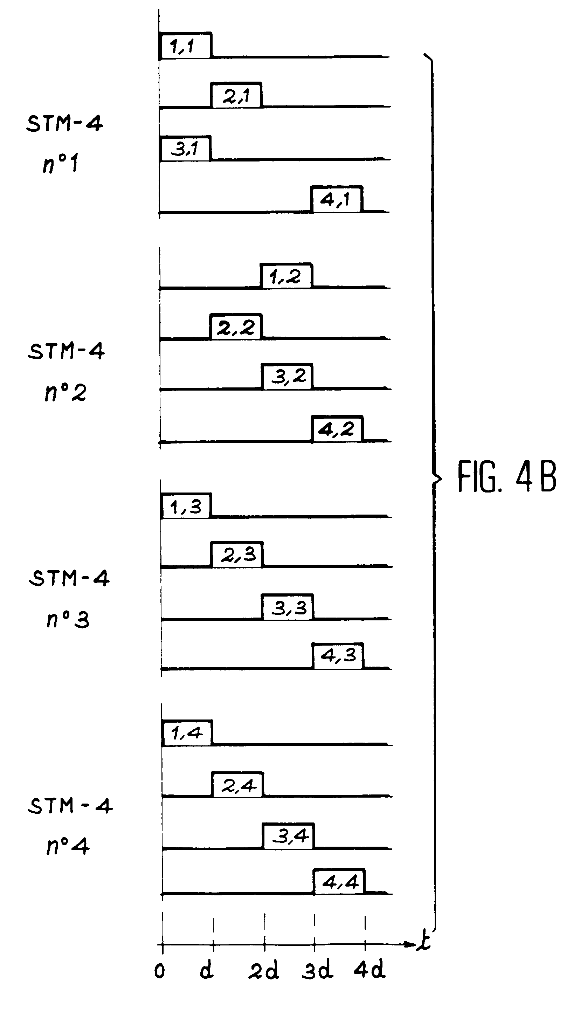

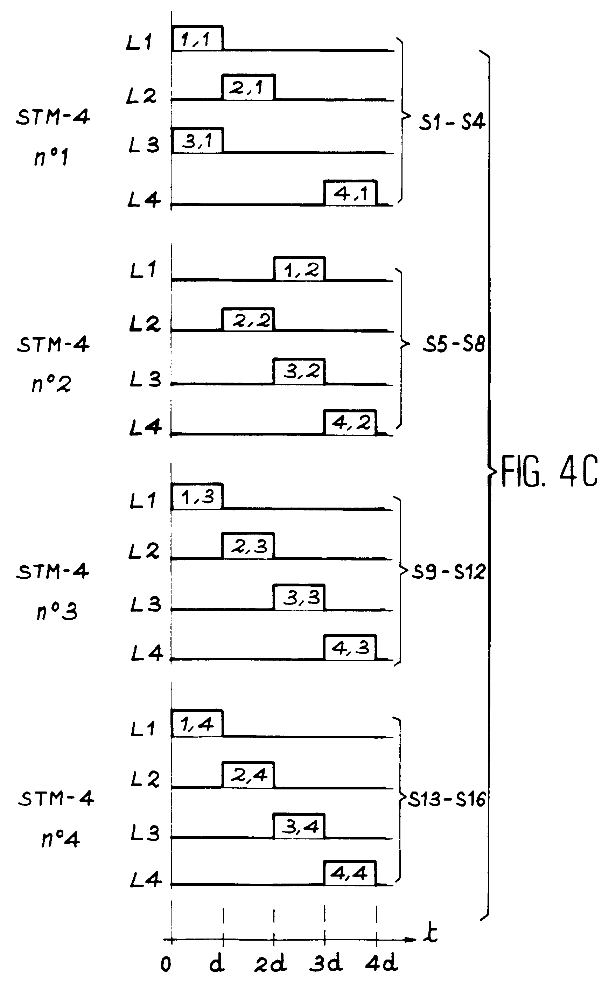

On explique ci-après le fonctionnement du répartiteur de la figure 3 en faisant référence aux figures 4A, 4B et 4C sur lesquelles la notation (i,j), où i prend les valeurs 1 à 4 et j prend également les valeurs 1 à 4, représente le STM-1 de rang i du STM-4 incident numéro j.

Pour expliquer ce fonctionnement, on suppose qu'on veut inverser les positions du STM-1 de rang 3 dans le premier STM-4 incident et du STM-1 de rang 1 dans le deuxième STM-4 incident.

En d'autres termes, on veut inverser les STM-1 référencés (3,1) et (1,2).

On voit sur la figure 4A la répartition temporelle des STM-1 sur les quatre voies de sortie de chaque démultiplexeur, la durée de chaque STM-1 étant encore notée d.

Après démultiplexage tous les STM-1 sont traités par les moyens de réorganisation qui sont commandés par les moyens de gestion G.

On précise que ces moyens de gestion G peuvent imposer une sortie déterminée à un STM-1
- selon une commande externe (répartition de trafic par exemple) ou
- selon un fonctionnement interne découlant de la prise en compte de l'adresse contenue dans l'entête de ce STM-1.

Dans l'exemple de fonctionnement choisi, les moyens de réorganisation introduisent
- une avance 2d sur le troisième STM-1 du STM-4 numéro 1 et
- un retard 2d sur le premier STM-1 du deuxième STM-4.

Ceci est illustré par la figure 4B qui montre la répartition temporelle des divers STM-1 sur les sorties des moyens de réorganisation M1 à M4.

On précise que tous les STM-1 subissent de plus un retard T lié au temps de calcul des moyens de gestion G.

Les signaux ainsi réorganisés sont ensuite convertis sous forme optique par les convertisseurs EO1 à EO16 avant de parvenir aux coupleurs optiques CO1 à CO4 correspondants.

Pour chacun de ces coupleurs, on trouve sur les quatre sorties de ce dernier les quatre signaux optiques aux quatre longueurs d'onde différentes L1 à L4.

Ceci est illustré par la figure 4C qui montre ces signaux optiques présents sur les sorties S1 à S16 des coupleurs CO1 à CO4.

Ensuite, le brassage spatial des STM-1 est assuré par les filtres F1 à F16 commandés par les moyens de gestion G et l'on obtient ainsi sur les sorties des coupleurs CS1 à CS4 les nouveaux STM-4 souhaités.

En particulier, le premier STM-4 de sortie est constitué par les STM-1 suivants, dans l'ordre indiqué :
(1,1), (2,1), (1,2), (4,1).

Le deuxième STM-4 de sortie est constitué par les STM-1 suivants, dans l'ordre indiqué :
(3,1), (2,2), (3,2), (4,2).

Ceci est obtenu avec les "positions" des filtres qui sont indiquées sur le tableau I que l'on trouvera à la fin de la présente description (et qui sont imposées par les moyens de gestion G).

Ainsi, pendant le premier intervalle de temps d'amplitude d, le filtre F1 laisse passer le signal de longueur d'onde L1 et tous les autres filtres sont au repos, c'est-à-dire ne laisse passer aucune lumière.

Pendant le deuxième intervalle de temps d'amplitude d, le filtre F1 laisse passer le signal de longueur d'onde L2 et tous les autres filtres sont au repos.

Pendant le premier intervalle de temps d'amplitude d, le filtre F2 laisse passer le signal de longueur d'onde L3 et tous les autres filtres sont au repos, etc.

On précise que les diverses liaisons optiques internes du répartiteur de la figure 4 sont réalisables avec des fibres optiques.

On peut aussi envisager une version intégrée de ce répartiteur dans laquelle ces liaisons internes sont réalisées par des guides d'ondes optiques intégrés.

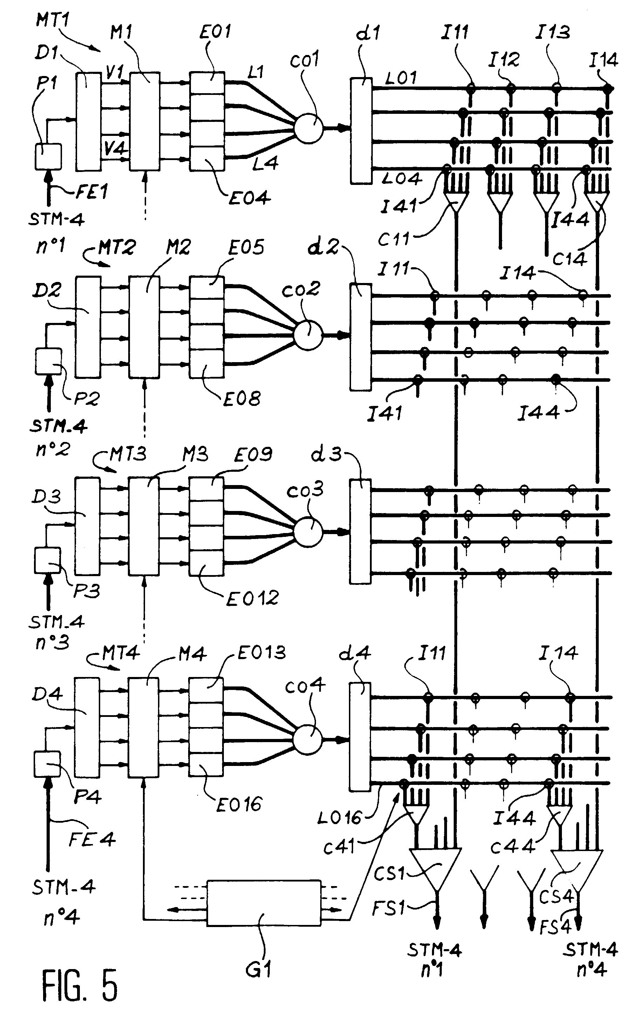

Sur la figure 5, on a représenté schématiquement un autre répartiteur optique conforme à la présente invention.

Cet autre répartiteur optique comprend encore, comme on le voit sur la figure 5, les fibres optiques FE1 à FE4, les photodétecteurs P1 à P4, les démultiplexeurs D1 à D4, les moyens de réorganisation M1 à M4, les convertisseurs électro-optiques EO1 à EO16, les coupleurs optiques de sortie CS1 à CS4 et les fibres optiques de sortie FS1 à FS4 dont il a été question dans la description de la figure 3.

De plus, le répartiteur de la figure 5 comprend dans chacun de ses modules de traitement (MT1 à MT4)
- un démultiplexeur en longueur d'onde (d1 à d4), à une entrée et quatre sorties, et
- un coupleur optique à quatre entrées et une sortie (co1 à co4).

Les quatre entrées de ce coupleur sont respectivement reliées aux sorties des quatre convertisseurs électro-optiques correspondants tandis que la sortie de ce coupleur est reliée à l'entrée ou démultiplexeur en longueur d'onde correspondant.

Le répartiteur de la figure 5 comprend de plus, dans chacun de ses modules de traitement, un ensemble d'interrupteurs optiques formant une matrice à quatre lignes et quatre colonnes.

Chaque interrupteur optique constitue un point de commutation optique et il est réalisable par la technologie des modulateurs électro-optiques ou celle des amplificateurs optiques.

Pour chaque module de traitement, chaque interrupteur optique porte la référence Iij où i est l'indice de ligne et varie de 1 à 4 et j est l'indice de colonne et varie également de 1 à 4, comme on le voit sur la figure 5.

De plus, comme on le voit sur la figure 5, chacune des lignes, référencées LO1 à LO16, est une ligne optique sur laquelle les interrupteurs correspondants sont montés en série, cette ligne optique étant reliée à une sortie du démultiplexeur en longueur d'onde correspondant.

A titre d'exemple, les interrupteurs optiques I11, I12, I13 et I14 sont montés en série sur une même ligne optique qui est reliée à la première sortie du démultiplexeur en longueur d'onde d1 appartenant au module de traitement MT1.

De plus, chaque module de traitement du répartiteur de la figure 5 comprend quatre coupleurs optiques à quatre entrées et une sortie qui sont référencés C11 à C14 pour le module MT1, ..., C41 à C44 pour le module MT4.

Chacun de ces coupleurs optiques est associé à une colonne de la matrice d'interrupteurs optiques correspondante.

Les quatre entrées de ce coupleur optique sont respectivement reliées aux quatre interrupteurs optiques de cette colonne tandis que la sortie de ce coupleur optique est reliée à une entrée de l'un des coupleurs optiques de sortie CS1 à CS4 : Cij représente ainsi le coupleur optique qui correspond au module de traitement MTi (1≤i≤4) et au coupleur optique de sortie CSj (1≤j≤4). Par exemple, les quatre entrées du coupleur CS1 sont respectivement reliées aux sorties des coupleurs C11, C21, C31 et C41 et les entrées du coupleur CS4 sont respectivement reliées aux sorties des coupleurs C14, C24, C34 et C44.

Dans le cas du répartiteur de la figure 5, les moyens de gestion, qui portent la référence G1, commandent les moyens de réorganisation M1 à M4 ainsi que tous les interrupteurs optiques.

Lorsqu'un interrupteur optique est à l'état ouvert, il se laisse traverser par une lumière incidente.

Lorsqu'il est à l'état fermé, cette lumière incidente est déviée vers l'entrée du coupleur optique à quatre entrées et une sortie qui est associé à cet interrupteur optique.

En ce qui concerne le fonctionnement du répartiteur représenté sur la figure 5, dans chaque module de traitement, on réalise
- un démultiplexage électronique,
- un réarrangement temporel des STM-1 correspondant et
- une transposition de ces derniers sur quatre longueurs d'onde différentes les unes des autres.

Ensuite, les signaux optiques résultant de cette transposition sont mis en commun par le coupleur à quatre entrées et une sortie correspondant, après quoi ces signaux optiques arrivent au démultiplexeur en longueur d'onde correspondant et sont séparés par ce dernier.

Ainsi, sur les quatre sorties de ce démultiplexeur en longueur d'onde, on retrouve respectivement quatre signaux de longueurs d'onde L1 à L4.

Ensuite, la matrice de commutation spatiale constituée par les interrupteurs optiques qui sont commandés par les moyens de gestion G1 réalise le brassage complet des divers STM-1.

En reprenant l'exemple que l'on avait donné dans la description de la figure 3, pour intervertir les signaux (1,2) et (3,1), il faut dans le cas de la figure 5 fermer les interrupteurs qui sont indiqués dans le tableau II que l'on trouvera à la fin de la présente description.

C'est ainsi que pendant le premier intervalle de temps d'amplitude d, les interrupteurs que l'on ferme sont
- pour le module MT1, les interrupteurs I11 et I32,
- pour le module MT3, l'interrupteur I13 et
- pour le module MT4, l'interrupteur I14,
tous les autres interrupteurs restant ouverts.

Pendant le deuxième intervalle de temps d'amplitude d, les interrupteurs que l'on ferme sont
- pour le module MT1, l'interrupteur I21,
- pour le module MT2, l'interrupteur I22,
- pour le module MT3, l'interrupteur I23,
- pour le module MT4, l'interrupteur I24,
tous les autres interrupteurs restant ouverts, etc.

Le répartiteur optique de la figure 5 peut être réalisé en technologie d'optique intégrée sur LiNbO₃ ou un autre matériau tel que InP, avec une commutation fondée sur un effet électro-optique, acousto-optique ou autre.

Dans le répartiteur de la figure 5, les coupleurs optiques co1 à co4 et les démultiplexeurs en longueur d'onde d1 à d4 ne sont pas indispensables.

Ils pourraient être supprimés et l'on raccorderait alors directement chaque convertisseur électro-optique à la ligne optique correspondante.

Cependant, leur utilisation permet de simplifier le câblage optique du répartiteur.

Avec le répartiteur de la figure 3 et également avec le répartiteur de la figure 5, les signaux STM-4 réarrangés sont transmis par les fibres optiques FS1 à FS4.

Cependant, la transmission de ces signaux risque d'être perturbée par la dispersion chromatique de ces fibres optiques.

Pour remédier à cet inconvénient, on peut convertir le signal optique fourni par chacun des coupleurs optiques de sortie CS1 à CS4 en un signal électrique et transformer à nouveau ce signal électrique en un signal optique.

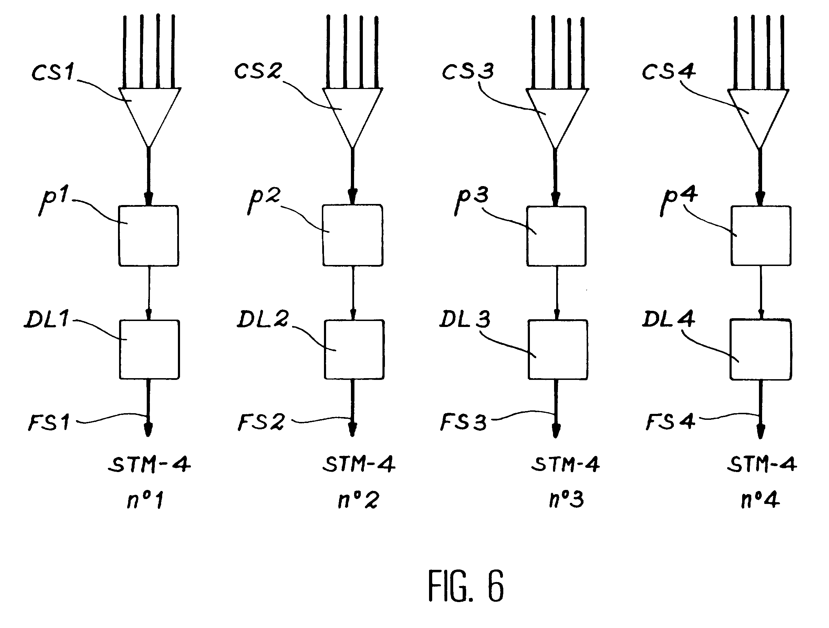

Ceci est illustré par la figure 6 où les sorties des coupleurs CS1 à CS4 sont respectivement reliées à des photo-détecteurs p1 à p4 et les sorties de ces photo-détecteurs p1 à p4 sont respectivement reliées aux entrées de convertisseurs électro-optiques DL1 à DL4 (qui sont par exemple des diodes lasers).

Ainsi, la sortie de chacune de ces diodes lasers qui est reliée à la fibre optique de sortie correspondante, fournit un STM-4 réarrangé dont tous les STM-1 sont à la même longueur d'onde.

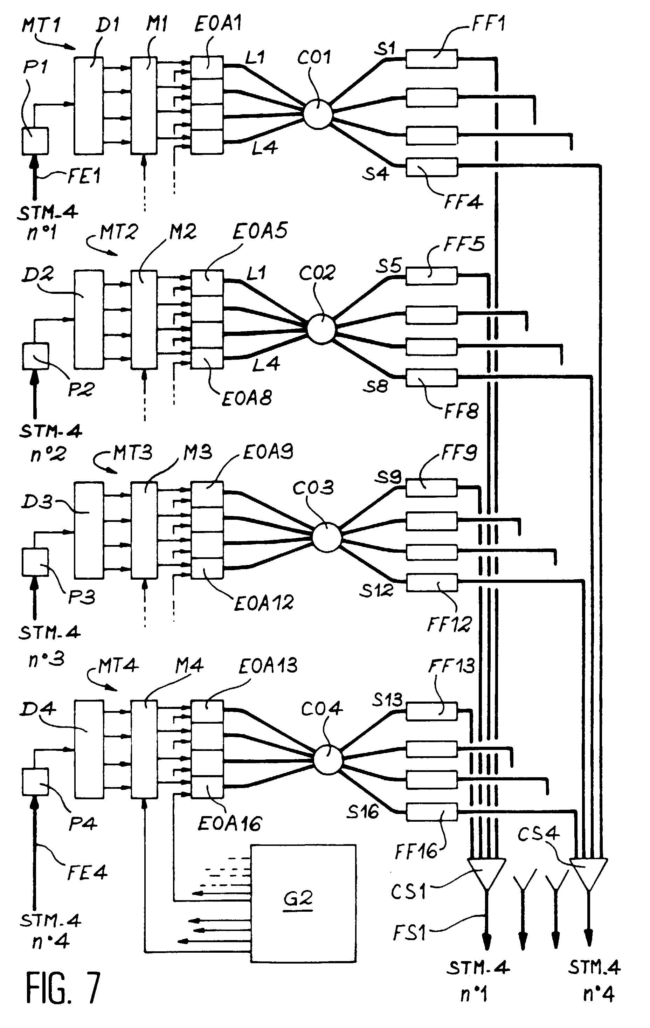

Un autre répartiteur optique conforme à l'invention est schématiquement représenté sur la figure 7.

Le répartiteur de la figure 7 est identique à celui de la figure 3 excepté que, dans le répartiteur de la figure 7,
- les convertisseurs électro-optiques EO1 à EO16 qui émettent chacun à une longueur d'onde invariable, sont remplacés par des convertisseurs électro-optiques accordables EOA1 à EOA16 et
- les filtres accordables F1 à F16 sont remplacés par des filtres FF1 à FF16 qui ne laissent passer chacun qu'une seule longueur d'onde déterminée.

De plus, les moyens de gestion G de la figure 3 sont remplacés, dans le répartiteur de la figure 7, par des moyens de gestion G2 qui commandent les convertisseurs EOA1 à EOA16 et, comme précédemment, les moyens de réorganisation M1 à M4.

La gestion électronique est "équivalente" à celle qui est utilisée pour le répartiteur de la figure 3 mais, dans le répartiteur de la figure 7, on peut choisir les longueurs d'onde qui correspondent à l'adresse finale afin d'obtenir des STM-1 de même longueur d'onde dans chaque STM-4 de sortie.

On peut ainsi émettre directement les informations sur une ligne de transmission sans avoir les inconvénients dus à la dispersion chromatique.

Dans l'exemple de répartiteur représenté sur la figure 7,
- les filtres FF1, FF5, FF9 et FF13 ne laissent passer que la longueur d'onde L1,
- les filtres FF2, FF6, FF10 et FF14 ne laissent passer que la longueur d'onde L2,
- les filtres FF3, FF7, FF11 et FF15 ne laissent passer que la longueur d'onde L3 et
- les filtres FF4, FF8, FF12 et FF16 ne laissent passer que la longueur d'onde L4.

Ainsi, les STM-4 de sortie numéro 1, 2, 3 et 4 sont respectivement aux longueurs d'onde L1, L2, L3 et L4.

En revenant à la réalisation de la figure 3, on notera que la disponibilité de filtres optiques à commutation rapide (de l'ordre de 1ns) permet de réaliser un répartiteur optique de grande capacité et de structure modulaire.

On peut réaliser un répartiteur qui réorganise 256 trames STM-1 provenant de 16 faisceaux STM-16 au moyen de la longueurs d'onde et de 16 modules de traitement comportant chacun 16 filtres optiques accordables à commutation rapide.

Un intérêt du répartiteur objet de l'invention réside dans sa structure modulaire, ce qui fait que sa capacité peut être augmentée de façon importante par addition de modules de traitement supplémentaires.

Si nécessaire, on peut munir chaque sortie du répartiteur objet de l'invention d'un amplificateur optique prévu pour amplifier le signal fourni par le coupleur optique de sortie correspondant.

Les répartiteurs conformes à l'invention qui ont été décrits en faisant référence aux figures 3, 5 et 7 reçoivent en entrée des signaux optiques par l'intermédiaire des fibres FE1 à FE4.

Cependant, ils pourraient être utilisés avec des signaux d'entrée électriques qui seraient directement envoyés aux entrées des démultiplexeurs D1 à D4 et les fibres optiques FE1 à FE4 ainsi que les photodétecteurs P1 à P4 seraient alors supprimés.

De plus, la présente invention n'est pas limitée au traitement de modules de transport synchrones.

Elle peut également être utilisée avec des signaux élémentaires organisés sous forme de paquets et transmis en mode de transfert asynchrone.

Dans ce cas, chaque module de traitement traite simultanément N paquets consécutifs du flux de paquets qui arrivent à l'entrée de ce module de traitement.

Ainsi, ce flux d'entrée est décomposé en ensembles comprenant chacun N paquets ou modules, N étant par exemple égal à 4.

Alors, chaque démultiplexeur électronique compte N intervalles de temps consécutifs d'amplitude d et réalise le démultiplexage des paquets présents dans l'intervalle de temps d'amplitude Nxd.

**TABLEAU I**

| | STM-4 n°1 | STM-4 n°2 | STM-4 n°3 | STM-4 n°4 |
|---|---|---|---|---|
| 0 à d | F1 : L1 | F2 : L3 | F11 : L1 | F16 : L1 |
| d à 2d | F1 : L2 | F6 : L2 | F11 : L2 | F16 : L2 |
| 2d à 3d | F5 : L1 | F6 : L3 | F11 : L3 | F16 : L3 |
| 3d à 4d | F1 : L4 | F6 : L4 | F11 : L4 | F16 : L4 |

**TABLEAU II**

| | MT1 | MT2 | MT3 | MT4 |
|---|---|---|---|---|
| 0 à d | I11,I32 | | I13 | I14 |
| d à 2d | I21 | I22 | I23 | I24 |
| 2d à 3d | | I11,I32 | I33 | I34 |
| 3d à 4d | I41 | I42 | I43 | I44 |

## Revendications

1. Répartiteur optique, comprenant :
- M entrées (FE1, FE2, FE3, FE4), M étant un nombre entier au moins égal à 1, chaque entrée recevant des signaux élémentaires,
- M modules de traitement (MT1, MT2, MT3, MT4) qui sont respectivement reliés aux M entrées, chaque module de traitement ayant N sorties et étant prévu pour traiter simultanément N signaux élémentaires consécutifs, N étant un nombre entier au moins égal à 1,
- N sorties (FS1, FS2, FS3, FS4),
- N coupleurs optiques (10; CS1, CS2, CS3, CS4), chacun de ceux-ci ayant M entrées respectivement associées aux M modules de traitement (MT1, MT2, MT3, MT4) et une sortie reliée à l'une des N sorties du répartiteur, et
- des moyens de gestion (6; G; G1; G2) qui commandent les modules de traitement (MT1, MT2, MT3, MT4) et qui permettent au répartiteur de brasser les signaux élémentaires qui arrivent aux M entrées de ce répartiteur, pour qu'un signal élémentaire donné parvienne à une sortie donnée du répartiteur,
caractérisé en ce que chaque module de traitement (MT1, MT2, MT3, MT4) comprend :
- des moyens de démultiplexage électronique prévus pour démultiplexer électroniquement les N signaux élémentaires consécutifs et fournir ainsi, sous forme électrique, N signaux élémentaires démultiplexés,
- des moyens de réarrangement temporel qui, sous la commande des moyens de gestion (6; G; G1; G2), sont prévus pour réarranger temporellement ces N signaux démultiplexés selon la sortie du répartiteur imposée par les moyens de gestion (6; G; G1; G2) pour chacun de ces N signaux démultiplexés, et
- des moyens de conversion électro-optique qui, également sous la commande des moyens de gestion (6; G; G1; G2), sont prévus pour transposer ces N signaux démultiplexés sous forme optique, à N longueurs d'ondes (L1, L2, L3, L4) différentes les unes des autres, et aiguiller chaque signal transposé vers la sortie voulue du répartiteur.

2. Répartiteur selon la revendication 1, caractérisé en ce que chaque module de traitement (MT1, MT2, MT3, MT4) comprend :
- des moyens de démultiplexage électronique (2; D1, D2, D3, D4) à 1 entrée reliée à l'entrée du répartiteur qui correspond à ce module de traitement, et N sorties, ces moyens de démultiplexage (2; D1, D2, D3, D4) étant prévus pour fournir respectivement en leurs N sorties les N signaux démultiplexés,
- des moyens de réorganisation (4; M1, M2, M3, M4) à N entrées respectivement reliées aux N sorties des moyens de démultiplexage (2; D1, D2, D3, D4), et à N sorties, ces moyens de réorganisation étant commandés par les moyens de gestion et prévus pour réorganiser temporellement les N signaux démultiplexés,
- N convertisseurs électro-optiques (eol à eo4; EO1 à EO4, EO5 à EO8, EO9 à EO12, EO13 à EO16) dont les entrées reçoivent respectivement les N signaux réorganisés temporellement et qui sont prévus pour fournir respectivement N signaux optiques dont les longueurs d'ondes respectives (L1, L2, L3, L4) sont différentes les unes des autres, et
- des moyens d'aiguillage (8, f1 à f4; CO1 à CO4, F1 à F16; co1 à co4, d1 à d4, I11 à I44, c11 à c44) qui sont commandés par les moyens de gestion (6; G; G1) et prévus pour aiguiller chaque signal optique vers la sortie voulue du répartiteur.

3. Répartiteur selon la revendication 2, caractérisé en ce que les moyens d'aiguillage comprennent :
- un coupleur optique intermédiaire (8; CO1 à CO4) à N entrées qui reçoivent respectivement les N signaux optiques, et N sorties, et
- N filtres optiques accordables (f1 à f4; F1 à F4, F5 à F8, F9 à F12, F13 à F16) qui sont commandés par les moyens de gestion (6; G), dont les entrées sont respectivement reliées aux sorties du coupleur optique intermédiaire et dont les N sorties sont respectivement reliées à N entrées appartenant respectivement aux N coupleurs optiques de sortie (10; CS1 à CS4),
chaque signal élémentaire traité étant ainsi aiguillé vers l'une des sorties du répartiteur.

4. Répartiteur selon la revendication 2, caractérisé en ce que les moyens d'aiguillage comprennent :
- un ensemble de NxN interrupteurs optiques (I11 à I44) qui sont commandés par les moyens de gestion (G1) et qui forment N lignes et N colonnes, chaque ligne comprenant N de ces interrupteurs optiques montés en série et formant une ligne optique reliée à la sortie de l'un des convertisseurs électro-optiques (EO1 à EO16), et
- N coupleurs optiques auxiliaires (c11 à c14, (...), c41 à c44) à N entrées et 1 sortie, les N entrées de chaque coupleur optique auxiliaire étant respectivement reliées aux N interrupteurs optiques de l'une des N colonnes et la sortie de ce coupleur optique auxiliaire étant reliée à l'une des entrées de l'un des coupleurs optiques de sortie du répartiteur.

5. Répartiteur selon la revendication 4, caractérisé en ce que les moyens d'aiguillage comprennent en outre :
- un coupleur optique intermédiaire (co1 à co4) à N entrées qui reçoivent respectivement les N signaux optiques des convertisseurs électro-optiques (EO1 à EO4), et 1 sortie, et
- un démultiplexeur en longueur d'onde (d1 à d4) à 1 entrée reliée à la sortie de ce coupleur optique intermédiaire, et N sorties respectivement reliées aux N lignes optiques de l'ensemble des interrupteurs optiques (I11 à I44).

6. Répartiteur selon l'une quelconque des revendications 2 à 5, caractérisé en ce qu'il comprend en outre :
- N photodétecteurs (p1, p2, p3, p4) dont les entrées sont respectivement reliées aux sorties des coupleurs optiques de sortie du répartiteur (CS1, CS2, CS3, CS4), et
- N convertisseurs électro-optiques auxiliaires (DL1, DL2, DL3, DL4) dont les entrées sont respectivement reliées aux sorties des N photodétecteurs (p1, p2, p3, p4),
les N sorties (FS1, FS2, FS3, FS4) du répartiteur étant respectivement reliées aux sorties de ces N convertisseurs électro-optiques auxiliaires, de sorte que chaque sortie du répartiteur fournit des signaux élémentaires qui sont sous forme optique et sont à la même longueur d'onde.

7. Répartiteur selon la revendication 1, caractérisé en ce que chaque module de traitement (MT1 à MT4) comprend :
- des moyens de démultiplexage électronique (D1 à D4) à 1 entrée reliée à l'entrée du répartiteur qui correspond à ce module de traitement, et N sorties, ces moyens de démultiplexage étant prévus pour fournir respectivement en leurs N sorties les N signaux démultiplexés,
- des moyens de réorganisation (M1 à M4) à N entrées respectivement reliées aux N sorties des moyens de démultiplexage, et à N sorties, ces moyens de réorganisation étant commandés par les moyens de gestion (G2) et prévus pour réorganiser temporellement les N signaux démultiplexés,
- N convertisseurs électro-optiques accordables (EOA1 à EOA4, EOA5 à EOA8, EOA9 à EOA12, EOA13 à EOA16) dont les entrées reçoivent respectivement les N signaux réorganisés temporellement, qui sont prévus pour fournir respectivement N signaux optiques, et qui sont commandés par les moyens de gestion (G2),
- un coupleur optique intermédiaire (CO1 à CO4) à N entrées qui reçoivent respectivement les N signaux optiques, et N sorties, et
- N filtres optiques (FF1 à FF4, FF5 à FF8, FF9 à FF12, FF13 à FF16) dont les entrées sont respectivement reliées aux sorties du coupleur optique intermédiaire (CO1 à CO4), dont les N sorties sont respectivement reliées à N entrées appartenant respectivement aux N coupleurs optiques de sortie (CS1 à CS4), et qui ne laissent passer chacun qu'une seule longueur d'onde, les N longueurs d'onde (L1, L2, L3, L4) que laissent respectivement passer ces filtres (FF1 à FF4, FF5 à FF8, FF9 à FF12, FF13 à FF16) étant différentes les unes des autres,
chaque signal élémentaire traité étant ainsi aiguillé vers l'une des sorties du répartiteur.

8. Répartiteur selon l'une quelconque des revendications 1 à 7, caractérisé en ce que chaque entrée (FE1, FE2, FE3, FE4) du répartiteur reçoit des signaux élémentaires sous forme optique et est reliée à l'entrée d'un photodétecteur (P1, P2, P3, P4) dont la sortie est reliée à l'entrée du module de traitement correspondant (MT1, MT2, MT3, MT4) pour fournir à ce dernier des signaux élémentaires sous forme électrique.

9. Répartiteur selon l'une quelconque des revendications 1 à 8, caractérisé en ce que chaque entrée (FE1, FE2, FE3, FE4) du répartiteur reçoit des signaux qui sont des modules de transport synchrone d'ordre N, chaque module de traitement (MT1, MT2, MT3, MT4) étant prévu pour traiter simultanément les N modules de transport synchrone d'ordre 1 de chacun de ces modules de transport synchrone d'ordre N.

10. Répartiteur selon l'une quelconque des revendications 1 à 8, caractérisé en ce que chaque entrée (FE1, FE2, FE3, FE4) du répartiteur reçoit des signaux élémentaires organisés sous forme de paquets et transmis en mode de transfert asynchrone, chaque module de traitement (MT1, MT2, MT3, MT4) étant prévu pour traiter simultanément N paquets consécutifs.

## Patentansprüche

1. Verteilereinrichtung für Lichtwellenleiter, umfassend:
- M Eingänge (FE1, FE2, FE3, FE4), wobei M eine ganze Zahl wenigstens gleich 1 ist und jeder Eingang Elementarsignale empfängt,
- M Verarbeitungsmodule (MT1, MT2, MT3, MT4), die jeweils mit den M Eingängen verbunden sind, wobei jeder Verarbeitungsmodul N Ausgänge hat und vorgesehen ist, simultan N aufeinanderfolgende Elementarsignale zu verarbeiten und N eine ganze Zahl wenigstens gleich 1 ist,
- N Ausgänge (FS1, FS2, FS3, FS4),
- N optische Koppler (10; CS1, CS2, CS3, CS4), von denen jeder M Eingänge hat, jeweils den M Verarbeitungsmodulen (MT1, MT2, MT3, MT4) zugeordnet, und einen Ausgang, verbunden mit einem der N Ausgänge der Verteilereinrichtung, und
- Verwaltungseinrichtungen (6; G; G1; G2), die die Verarbeitungsmodule (MT1, MT2, MT3, MT4) steuern und die der Verteilereinrichtung ermöglichen, mit den Elementarsignalen umzugehen (brasser), die an den M Eingängen dieser Verteilereinrichtung eintreffen, so daß ein bestimmtes Elementarsignal einen bestimmten Ausgang der Verteilereinrichtung erreicht,
**dadurch gekennzeichnet,** daß jeder Verarbeitungsmodul (MT1, MT2, MT3, MT4) umfaßt:
- Demultiplexingeinrichtungen, um die N aufeinanderfolgenden Elementarsignale elektronisch zu demultiplexen und derart N demultiplexte Elementarsignale in elektrischer Form zu liefern,
- temporäre Umordnungseinrichtungen, gesteuert von den Verwaltungseinrichtungen (6; G; G1; G2), um diese N demultiplexten Signale temporär umzuordnen entsprechend dem durch die Verwaltungseinrichtungen (6; G; G1; G2) jedem der N demultiplexten Signale vorgeschriebenen Ausgang der Verteilereinrichtung, und
- elektrooptische Umwandlungseinrichtungen, ebenfalls gesteuert durch die Verwaltungseinrichtungen (6; G; G1; G2), um diese N demultiplexten Signale in optische Form umzusetzen, mit N jeweils verschiedenen Wellenlängen (L1, L2, L3, L4), und um jedes umgesetzte Signal zu dem gewünschten Ausgang der Verteilereinrichtung zu leiten.

2. Verteilereinrichtung nach Anspruch 1, dadurch gekennzeichnet, daß jeder Verarbeitungsmodul (MT1, MT2, MT3, MT4) umfaßt:
- elektronische Demultiplexingeinrichtungen (2; D1, D2, D3, D4) mit 1 Eingang, verbunden mit dem Eingang der Verteilereinrichtung, die diesem Verarbeitungsmodul entspricht, und N Ausgängen, wobei diese Demultiplexingeinrichtungen (2; D1, D2, D3, D4) vorgesehen sind, jeweils an ihren N Ausgängen die N demultiplexten Signale zu liefern,
- Reorganisationseinrichtungen (4; M1, M2, M3, M4) mit N Eingängen, jeweils verbunden mit den N Ausgängen der Demultiplexingeinrichtungen (2; D1, D2, D3, D4), und mit N Ausgängen, wobei diese Reorganisationseinrichtungen durch die Verwaltungseinrichtungen gesteuert werden und vorgesehen sind, temporär die N demultiplexten Signale zu reorganisieren,
- N elektrooptische Wandler (eo1 bis eo4; EO1 bis EO4, EO5 bis EO8, EO9 bis EO12, EO13 bis EO16), deren Eingänge jeweils die N temporär reorganisierten Signale empfangen und die vorgesehen sind, jeweils N optische Signale zu liefern, deren jeweilige Wellenlängen (L1, L2, L3, L4) sich voneinander unterscheiden, und
- Leit- bzw. Verzweigungseinrichtungen (8, f1 bis f4; CO1 bis CO4, F1 bis F16; co1 bis co4, d1 bis d4, I11 bis I44, c11 bis c44), die durch die Verwaltungseinrichtungen (6; G; G1) gesteuert werden und vorgesehen sind, jedes optische Signal zu dem gewünschten Ausgang der Verteilereinrichtung zu leiten.

3. Verteilereinrichtung nach Anspruch 2, dadurch gekennzeichnet, daß die Leit- bzw. Verzweigungseinrichtungen umfassen:
- einen optischen Zwischenkoppler (8; CO1 bis CO4) mit N Eingängen, die jeweils die N optischen Signale empfangen, und N Ausgängen, und
- N abstimm- bzw. einstellbare optische Filter (f1 bis f4; F1 bis F4, F5 bis F8, F9 bis F12, F13 bis F16), gesteuert durch die Verwaltungseinrichtungen (6; G), deren Eingänge jeweils mit den Ausgängen des optischen Zwischenkopplers verbunden sind und deren N Ausgänge jeweils mit N Eingängen verbunden sind, die jeweils zu den N optischen Ausgangskopplern (10; CS1 bis CS4) gehören,
wobei jedes verarbeitete Elementarsignal folglich zu einem der Ausgänge der Verteilereinrichtung geleitet wird.

4. Verteilereinrichtung nach Anspruch 2, dadurch gekennzeichnet, daß die Leit- bzw. Verzweigungseinrichtungen umfassen:
- eine Gruppe von NxN optischen Schaltern (I11 bis I44), die durch die Verwaltungseinrichtungen (G1) gesteuert werden und die N Zeilen und N Spalten bilden, wobei jede Zeile N dieser optischen Schalter umfaßt, die in Reihe geschaltet sind und eine mit dem Ausgang von einem der elektrooptischen Wandler (EO1 bis EO16) verbundene optische Zeile bilden,
- N optische Hilfskoppler (c11 bis c14; (...), c41 bis c44) mit N Eingängen und 1 Ausgang, wobei die N Eingänge jedes optischen Hilfskopplers jeweils verbunden sind mit den N optischen Schaltern von einer der N Spalten und der Ausgang dieses optischen Hilfskopplers mit einem der Eingänge von einem der optischen Ausgangskoppler der Verteilereinrichtung verbunden ist.

5. Verteilereinrichtung nach Anspruch 4, dadurch gekennzeichnet, daß die Leit- bzw. Verzweigungseinrichtungen außerdem umfassen:
- einen optischen Zwischenkoppler (co1 bis co4) mit N Eingängen, die jeweils die N optischen Signale der elektrooptischen Wandler (EO1 bis EO4) empfangen, und 1 Ausgang, und
- einen Wellenlängen-Demodulator (d1 bis d4) mit 1 Eingang, verbunden mit dem Ausgang dieses optischen Zwischenkopplers, und N Ausgängen, jeweils verbunden mit den N optischen Zeilen der Gruppe der optischen Schalter (I11 bis I44).

6. Verteilereinrichtung nach einem der Ansprüche 2 bis 5, dadurch gekennzeichnet, daß sie außerdem umfaßt:
- N Photodetektoren (p1, p2, p3, p4), deren Eingänge jeweils verbunden sind mit den Ausgängen der optischen Ausgangskoppler der Verteilereinrichtung (CS1, CS2, CS3, CS4), und
- N elektrooptische Hilfswandler (DL1, DL2, DL3, DL4), deren Eingänge jeweils verbunden sind mit den Ausgängen der N Photodetektoren (p1, p2, p3, p4),
wobei die N Ausgänge (FS1, FS2, FS3, FS4) der Verteilereinrichtung jeweils verbunden sind mit den Ausgängen dieser N elektrooptischen Hilfswandler, so daß jeder Ausgang der Verteilereinrichtung Elementarsignale in optischer Form und mit derselben Wellenlänge liefert.

7. Verteilereinrichtung nach Anspruch 1, dadurch gekennzeichnet, daß jeder Verarbeitungsmodul (MT1 bis MT4) umfaßt:
- elektronische Demultiplexingeinrichtungen (D1 bis D4) mit 1 Eingang, verbunden mit dem Eingang der Verteilereinrichtung, die diesem Verarbeitungsmodul entspricht, und N Ausgängen, wobei diese Demultiplexingeinrichtungen vorgesehen sind, jeweils an ihren N Ausgängen die N demultiplexten Signale zu liefern,
- Reorganisationseinrichtungen (M1 bis M4) mit N Eingängen, jeweils verbunden mit den N Ausgängen der Demultiplexingeinrichtungen, und mit N Ausgängen, wobei diese Reorganisationseinrichtungen durch die Verwaltungseinrichtungen (G2) gesteuert werden und vorgesehen sind, die N demultiplexten Signale temporär zu reorganisieren,
- N abstimm- bzw. einstellbare elektrooptische Wandler (EOA1 bis EOA4, EOA5 bis EOA8, EOA9 bis EOA12, EOA13 bis EOA16), deren Eingänge jeweils die N temporär reorganisierten Signale empfangen, die vorgesehen sind, N optische Signale zu liefern und die durch die Verwaltungseinrichtungen (G2) gesteuert werden,
- einen optischen Zwischenkoppler (CO1 bis CO4) mit N Eingängen, die jeweils die N optischen Signale empfangen, und N Ausgängen, und
- N optischen Filtern (FF1 bis FF4, FF5 bis FF8, FF9 bis FF12, FF13 bis FF16), deren Eingänge jeweils verbunden sind mit den Ausgängen der optischen Zwischenkoppler (CO1 bis CO4), deren N Ausgänge jeweils verbunden sind mit N Eingängen, die zu den N optischen Ausgangskopplern (CS1 bis CS4) gehören und die jeder nur eine Wellenlänge durchlassen, wobei die N Wellenlängen (L1, L2, L3, L4), die diese Filter (FF1 bis FF4, FF5 bis FF8, FF9 bis FF12, FF13 bis FF16) jeweils durchlassen, sich voneinander unterscheiden,
wobei derart jedes verarbeitete Signal zu einem der Ausgänge der Verteilereinrichtung geleitet wird.

8. Verteilereinrichtung nach einem der Ansprüche 1 bis 7, dadurch gekennzeichnet, daß jeder Eingang (FE1, FE2, FE3, FE4) der Verteilereinrichtung Elementarsignale in optischer Form empfängt und verbunden ist mit dem Eingang eines Photodetektors (P1, P2, P3, P4), dessen Ausgang verbunden ist mit dem Eingang des entsprechenden Verarbeitungsmoduls (MT1, MT2, MT3, MT4), um an diesen letzteren Elementarsignale in elektrischer Form zu liefern.

9. Verteilereinrichtung nach Anspruch 1 bis 8, dadurch gekennzeichnet, daß jeder Eingang (FE1, FE2, FE3, FE4) der Verteilereinrichtung Signale empfängt, die Synchrontransportmodule N-ter Ordnung sind, wobei jeder Verarbeitungsmodul (MT1, MT2, MT3, MT4) vorgesehen ist, um die N Synchrontransportmodule erster Ordnung jedes dieser Synchrontransportmodule N-ter Ordnung simultan zu verarbeiten.

10. Verteilereinrichtung nach einem der Ansprüche 1 bis 8, dadurch gekennzeichnet, daß jeder Eingang (FE1, FE2, FE3, FE4) der Verteilereinrichtung Elementarsignale empfängt, die in Form von Paketen geordnet sind und im Asynchronübertragungsmodus übertragen werden, wobei jeder Verarbeitungsmodul (MT1, MT2, MT3, MT4) vorgesehen ist, simultan N aufeinanderfolgende Pakete zu verarbeiten.

## Claims

1. Optical distributor, comprising:
- M inputs (FE1, FE2, FE3, FE4), M being an integer at least equal to 1, each input receiving elementary signals,
- M processing modules (MT1, MT2, MT3, MT4) respectively connected to the M inputs, each processing module having N outputs and simultaneously processing N consecutive elementary signals, N being an integer at least equal to 1,
- N outputs (FS1, FS2, FS3, FS4),
- N optical couplers (10; CS1, CS2, CS3, CS4), each having M inputs respectively associated with the M processing modules (MT1, MT2, MT3, MT4) and an output connected to one of the N outputs of the distributor and
- control means (6; G; G1; G2), which control the processing modules (MT1, MT2, MT3, MT4) and enable the distributor to scramble the elementary signals reaching the M inputs thereof, so that a given elementary signal reaches a given output of the distributor,
characterized in that each processing module (MT1, MT2, MT3, MT4) comprises:
- electronic demultiplexing means for electronically demultiplexing the N consecutive elementary signals and thus supplying, in electrical form, N demultiplexed elementary signals,
- time rearrangement means under the control of the control means (6; G; G1, G2) for rearranging on a time basis said N demultiplexed signals in accordance with the output of the distributor imposed by the control means (6; G; G1; G2) for each of said N demultiplexed signals and
- electrooptical conversion means also under the control of the control means (6; G; G1; G2), which transpose the N demultiplexed signals in optical form at N different wavelengths (L1, L2, L3, L4) from one another and switches each transposed signal to the desired output of the distributor.

2. Distributor according to claim 1, characterized in that each processing module (MT1, MT2, MT3, MT4) comprises:
- electronic demultiplexing means (2; D1, D2, D3, D4) having one input connected to the input of the distributor, which corresponds to said processing module, and N outputs, said demultiplexing means (2; D1, D2, D3, D4) supplying respectively at their N outputs the N demultiplexed signals,
- reorganization means (4; M1, M2, M3, M4) with N inputs respectively connected to the N outputs of the demultiplexing means (2; D1, D2, D3, D4), and to N outputs, said reorganization means being controlled by the control means and reorganize on a time basis the N demultiplexed signals,
- N electrooptical converters (eo1 to eo4; EO1 to EO4, EO5 to EO8, EO9 to EO12, EO13 to EO16) whose inputs respectively receive the N time reorganized signals and which respectively supply N optical signals, whose respective wavelengths (L1, L2, L3, L4) differ from one another and
- switching means (8, f1 to f4; CO1 to CO4, F1 to F16; col to co4, d1 to d4, I11 to I44, c11 to c44) controlled by the control means (6; G; G1) and which switch each optical signal to the desired output of the distributor.

3. Distributor according to claim 2, characterized in that the switching means can comprise:
- an intermediate optical coupler (8; CO1 to CO4) with N inputs, which respectively receive the N optical signals, and N outputs and
- N tunable optical filters (f1 to f4; F1 to F4, F5 to F8, F9 to F12, F13 to F16), which are controlled by the control means (6; G), whose inputs are respectively connected to the outputs of the intermediate optical coupler and whose N outputs are respectively connected to the N inputs respectively belonging to the N optical output couplers, (10; CS1 to CS4) so that each processed elementary signal is switched to one of the outputs of the distributor.

4. Distributor according to claim 2, characterized in that the switching means comprise:
- an array of NxN optical switches (I11 to I44), which are controlled by control means (G1) and which form N rows and N columns, each row having N of said series-connected optical switches and forming an optical line connected to the output of one of the electrooptical converters (EO1 to EO16) and
- N auxiliary optical couplers (c11 to c14, (...), c41 to c44) with N inputs and one output, the N inputs of each auxiliary optical coupler being respectively connected to the N optical switches of one of the N columns and the output of said auxiliary optical coupler is connected to one of the inputs of one of the output optical couplers of the distributor.

5. Distributor according to claim 4, characterized in that the switching means also comprise:
- an intermediate optical coupler (co1 to co4) with N inputs, which respectively receive the N optical signals from the electrooptical converts (EO1 to EO4), and one output and
- a wavelength demultiplexer (d2 to d4) with one input connected to the output of said intermediate optical coupler, and N outputs respectively connected to the N optical lines of the array of optical switches (I11 to I44).

6. Distributor according to anyone of the claims 2 to 5, characterized in that it also comprises:
- N photodetectors (p1, p2, p3, p4), whose inputs are respectively connected to the outputs of the output optical couplers of the distributor (CS1, CS2, CS3, CS4) and
- N auxiliary electrooptical converters (DL1, DL2, DL3, DL4), whose inputs are respectively connected to the outputs of the N photodetectors (p1, p2, p3, p4), the N outputs (FS1, FS2, FS3, FS4) of the distributor being respectively connected to the outputs of said N auxiliary electrooptical converters, so that each output of the distributor supplies elementary signals, which are in optical form and have the same wavelength.

7. Distributor according to claim 1, characterized in that each processing module (MT1 to MT4) comprises:
- electronic demultiplexing means (D1 to D4) having one input connected to the input of the distributor corresponding to said processing module, and N outputs, said demultiplexing means supplying respectively at their N outputs the N demultiplexed signals,
- reorganization means (M1 to M4) having N inputs respectively connected to the N outputs of the demultiplexing means, and with N outputs, said reorganization means being controlled by the control means (G2) and time reorganize the N demultiplexed signals,
- N tunable electrooptical converters (EOA1 to EOA4, EOA5 to EOA8, EOA9 to EOA12, EOA13 to EOA16) whose inputs respectively receive the N time reorganized signals, which respectively supply N optical signals and which are controlled by the control means (G2),
- an intermediate optical coupler (CO1 to CO4) with N inputs, which respectively receive the N optical signals, and N outputs and
- N optical filters (FF1 to FF4, FF5 to FF8, FF9 to FF12, FF13 to FF16), whose inputs are respectively connected to the outputs of the intermediate optical coupler (CO1 to CO4), whose N outputs are respectively connected to N inputs respectively belonging to the N output optical couplers (CS1 to CS4) and which in each case only allow the passage of a single wavelength, the N wavelengths (L1, L2, L3, L4) traversing said filters (FF1 to FF4, FF5 to FF8, FF9 to FF12, FF13 to FF16) differing from one another, each processed elementary signal being in this way switched to one of the outputs of the distributor.

8. Distributor according to any one of the claims 1 to 7, characterized in that each input (FE1, FE2, FE3, FE4) of said distributor receives elementary signals in optical form and is connected to the input of a photodetector (P1, P2, P3, P4), whose output is connected to the input of the corresponding processing module (MT1, MT2, MT3, MT4) in order to supply the latter with the elementary signals in electrical form.

9. Distributor according to any one of the claims 1 to 8, characterized in that each input (FE1, FE2, FE3, FE4) of the distributor receives signals, which are synchronous transfer modules of order N, each processing module (MT1, MT2, MT3, MT4) simultaneously processing the N order 1 synchronous transfer modules of each of the order N synchronous transfer modules.

10. Distributor according to any one of the claims 1 to 8, characterized in that each input (FE1, FE2, FE3, FE4) of the distributor receives elementary signals organized in packet form and transmitted in the asynchronous transfer mode, each processing module (MT1, MT2, MT3, MT4) simultaneously processing N consecutive packets.
